# EUROPEAN PATENT SPECIFICATION

(11) **EP 3 294 458 B1**
(45) Date of publication and mention of the grant of the patent: **21.10.2020**
(21) Application number: 15891732.8
(22) Date of filing: 13.05.2015
(51) Int. Cl.: B03D 1/14, B03D 1/16, B65D 88/02, B65D 90/20, E04H 7/02, B29C 41/04, B03D 1/02, B03D 1/20, B29C 41/06

(54) **A FLOTATION TANK, A TANK MODULE AND ITS USES AND A METHOD OF REPLACING THE FLOTATION TANK**
FLOTATIONSTANK, TANKMODUL UND DESSEN VERWENDUNGEN UND VERFAHREN ZUM AUSTAUSCHEN DES FLOTATIONSTANKS
BASSIN DE FLOTTATION, MODULE DE BASSIN ET SES UTILISATIONS ET PROCÉDÉ DE REMPLACEMENT DU BASSIN DE FLOTTATION

(43) Date of publication of application: 21.03.2018
(73) Proprietor: Outotec (Finland) Oy, 02230 Espoo (FI)
(72) Inventor: TÄHKIÖ, Pekka, FI-02230 Espoo (FI); VAARNA, Valtteri, FI-00530 Helsinki (FI); LUUKKONEN, Matti, FI-00260 Helsinki (FI)
(74) Representative: Papula Oy
(86) International application number: PCT/FI2015/050327
(87) International publication number: WO 2016/181024

(56) References cited:
- EP-A1- 0 156 699
- EP-A1- 2 088 196
- WO-A1-2010/135760
- WO-A1-2010/142844
- WO-A1-2011/104437
- WO-A2-2008/156835
- WO-A2-2012/047680
- CN-U- 201 702 028
- FR-A1- 2 815 021
- US-A- 2 142 010
- US-A- 3 972 815
- US-A- 5 205 926
- US-A- 5 890 616
- US-A1- 2008 257 894
- US-A1- 2009 120 850
- US-A1- 2012 111 436
- SANTANDER, M. ET AL.: 'Adsorbing colloidal flotation removing metals ions in modified jet cell' MINERALS ENGINEERING vol. 24, no. 9, 29 April 2011, ISSN 0892-6875 pages 1010 - 1015, XP028375348

## Description

### FIELD OF THE INVENTION

The present invention relates to a flotation tank. Further, the invention relates to a tank module.

Further, the invention relates to uses of the tank module. Further, the invention relates to a method of replacing the flotation tank.

### SUMMARY OF THE INVENTION

According to a first aspect, the present invention provides a flotation tank. The flotation tank comprises a self-supporting tank. The tank is made of thermoplastic polymer. The tank has a lower tank part and a tapered upper tank part. The tapered upper tank part is narrower than the lower tank part. The tank has a mouth at the upper end of the upper tank part and an overflow lip at the periphery of the mouth. Further, the flotation tank comprises an overflow receptacle. The overflow receptacle is made of thermoplastic polymer and connected to the tapered upper part of the tank beside the overflow lip. The overflow receptacle receives collects and discharges an overflow that overflows from the tank over the overflow lip, when in use.

The technical effect of the invention is that as the tank is a self-supporting unit and the overflow receptacle is connected to the tank, this assembly can be handled, hoisted and transferred together as one integral entity. The tank has a rigid monocoque structure that is able to hold its form and forms a rigid support for the overflow receptacle. The tapered upper part gives stiffness for the entire flotation tank. The tapering at the upper part also provides an optimal flow pattern inside flotation tank, when in use.

A flotation module making use of self-supporting tank is known from US5205926. Flotation tanks being made of thermoplastic polymers are known from WO2008156835. A flotation tank comprising an adjustable overflow weir is known from US3972815.

In this application the following definitions apply regarding flotation. Flotation involves phenomena related to the relative buoyancy of objects. The term flotation includes all flotation techniques. Flotation can be for example froth flotation, dissolved air flotation (DAF) or induced gas flotation. Froth flotation is a process for separating hydrophobic materials from hydrophilic materials by adding gas, for example air, to process. Froth flotation could be made based on natural hydrophilic/hydrophobic difference or based on hydrophilic/hydrophobic differences made by addition of a surfactant or collector chemical. Gas can be added to the feedstock subject of flotation (slurry or pulp) by a number of different ways. In one embodiment gas can be added to the stream of feedstock subject to flotation before it is fed to the flotation tank. In one embodiment gas can be added to feedstock subject to flotation in the flotation tank. In one embodiment gas adding equipment can include gas dispersing equipment at the bottom of the tank. In one embodiment gas system equipment can include a feedstock (slurry or pulp) jet for jetting the feedstock to air. In one embodiment gas adding equipment includes a rotor inside the tank. In one embodiment gas can be added under the rotor In one embodiment gas is added by a pipe ending under rotor. The pipe can be inside the flotation tank. The pipe can go through the bottom of the flotation tank. In one embodiment the rotor takes gas from the surface of sludge by vortex. In one embodiment is added by axis of the rotor. In one embodiment mixing equipment is arranged for mixing the slurry/pulp. Mixing equipment could be for example a pump or a rotor. When the mixing is made by pump, the feedstock subject of flotation could be taken from one part of flotation tank and put back to another part of flotation tank. When mixing is made by the rotor, the rotor is inside the flotation tank. In one embodiment mixing equipment can include a rotor inside the flotation tank. In one embodiment mixing equipment can include a stator inside the flotation tank. The stator is for boosting mixing and to diffuse air to the feedstock (slurry or pulp) subject to flotation.

In one embodiment of the flotation tank, the overflow receptacle and the tank are connected together by welding. The technical effect is that the flotation tank has a good structural stiffness which makes maintenance easy as manageability during maintenance is good.

In one embodiment of the flotation tank, the overflow receptacle circumferentially surrounds the mouth of the tank. The technical effect is that the flotation tank has a good structural stiffness which makes maintenance easy as manageability during maintenance is good.

The overflow lip comprises a separate lip member, and the lip member is connectable to the upper part of the tank at the region of the mouth at a desired height position to obtain a suitable overflow height for the overflow. The technical effect is that the overflow heights of identical tanks can be made different with an adjustable lip member. Maintenance is easy as the flotation tanks can be identical and the required overflow height can be adjusted by a suitable height position of the lip member for each tank.

In one embodiment of the flotation tank, the overflow receptacle comprises a chute to collect the overflow, when in use, and at least one outlet at the lowest part of the overflow receptacle, and the chute is inclined towards the outlet. The technical effect is that the flow of overflow by gravity is ensured by the inclination.

In one embodiment of the flotation tank, the overflow receptacle has a straight bottom.

In one embodiment of the flotation tank, an angle of inclination of the chute is 5° - 30°, more preferably 8° - 20°, most preferably 10° - 15°. The technical effect of the angle of inclination especially for the angles 8° - 20°, most preferably 10° - 15°, is that the chute does not become blocked and does not wear excessively. Need for maintenance is thereby minimized.

In one embodiment of the flotation tank, the tank has a wall thickness which is 5 - 30 mm. The technical effect of the wall thickness within this range is that the tank will not be too heavy so that it can be changed easily but yet it is stiff enough so that it can be easily installed. The tapering of the tank at its upper part makes it stiff so that the tank is stiff despite the relatively thin wall. This makes maintenance easy.

In one embodiment of the flotation tank, the volume of the tank is 0.5 - 20 m³, more preferably 1 - 15 m³, most preferably 1 - 8 m³. The technical effect is that the tanks can be changed easily as they are not too big and heavy. The tanks are still big enough so that a significant volume of capacity can be subjected to maintenance by changing a few tanks. The maintenance operations can be easily made for tanks which are not too big and heavy.

In one embodiment of the flotation tank, the cross-sectional shape of the lower tank part is rectangular when the volume of the tank is greater than 8 m³. The technical effect is that such great tanks can be supported by sidewalls of the self-supporting framework in the inner space of which the tanks are installed in a tank module. The wall of the tank can be supported against the sidewall of the framework so that the framework bears loads exerted by the hydrostatic pressure of the liquid filled inside the tank.

In one embodiment of the flotation tank, the cross-sectional shape of the lower tank part is circular when the volume of the tank is at most 8 m³. The technical effect is that the round form gives the required stiffness for the tank up to this size class.

In one embodiment of the flotation tank, the cross-sectional shape of the lower tank part being rectangular the mouth is rectangular or circular. The technical effect of the circular mouth is that it stiffens the structure of the flotation tank. Maintenance is easy as the flotation tanks to be changed have sufficient stiffness.

In one embodiment of the flotation tank, the cross-sectional shape of the lower tank part being circular the mouth is circular. The technical effect of the circular mouth is that the entity formed by the tank and the overflow receptacle together is stiff to enable easy handling, lifting and maintenance.

In one embodiment of the flotation tank, the thermoplastic polymer is polyethylene or polypropylene. The technical effect of these materials is that they are very resistant to abrasive wear. Especially, when the flotation tank is in use it may accommodate a rotating rotor for gas adding and/or mixing, the mixing of the feedstock subject of flotation by a rotor causes the feedstock (which can be very abrasive) to flow against inner surface of the tank wall and thereby causes severely abrasive wear conditions. Need for maintenance is minimized.

In one embodiment of the flotation tank, the thermoplastic polymer is polyethylene.

In one embodiment of the flotation tank, the thermoplastic polymer is polypropylene.

In one embodiment of the flotation tank, the tank and the overflow receptacle are rotational molded parts. The technical effect is that with rotational molding it is easy to create stiff tank forms from abrasive resistant plastics materials so that the tank may have a form which can create a good flow pattern for the feedstock subject of flotation during flotation process. Also other manufacturing techniques are possible, for example in one embodiment of the flotation tank the tank and/or the overflow receptacle may be 3D printed parts.

In one embodiment of the flotation tank, the area to volume ratio between area of the mouth and volume of the flotation tank is 0.15 - 0.4/m. The technical effect is that maintenance is easy as the maintenance tools can be brought into the tank via the mouth. The mouth is not too big so that it would not provide structural support and stiffness. The mouth having the above-mentioned area to volume ratio enables easy maintenance as the required tools can be brought into the tank via the mouth while the tank has a sufficient stiffness.

In one embodiment of the flotation tank, flotation is froth flotation.

According to a second aspect of the invention, the invention provides a tank module comprising a self-supporting framework having an inner space, and at least one flotation tank according to the first aspect of the invention is disposed in the inner space.

In one embodiment of the tank module, the tank module includes at least two successive flotation tanks which are in fluid communication with each other, the flotation tanks each having a lip member which is adjusted at a different height position in relation to the lip member of the other flotation tank.

According to a third aspect not forming part of the invention, it is provided a flotation plant comprising a tank module according to the second aspect of the invention, and a drive module. The drive module is removably stacked and aligned on top of the tank module and includes at least two drive units for the equipment immersed in the feedstock subject to flotation, the equipment performing the flotation action. The drive module is a rigid and self-supporting unit capable of being transferable and hoistable as an integral entity.

In one embodiment of the flotation plant, flotation is froth flotation.

In one embodiment of the flotation plant, the flotation plant comprises gas adding equipment for adding gas to the feedstock subject of flotation.

In one embodiment of the flotation plant, the flotation plant comprises gas adding equipment for adding gas to the stream of the feedstock subject of flotation before entering the flotation tank.

In one embodiment of the flotation plant, the flotation plant comprises gas adding equipment for adding gas to the feedstock subject of flotation in the flotation tank.

In one embodiment of the flotation plant, the gas adding equipment includes a rotor inside the flotation tank.

In one embodiment of the flotation plant, the gas adding equipment includes a hollow drive shaft rotatable by the drive unit, and the rotor is connected to the drive shaft.

In one embodiment of the flotation plant, the feedstock subject of flotation is slurry or pulp.

In one embodiment of the flotation plant, the flotation plant comprises mixing equipment.

In one embodiment of the flotation plant, the mixing equipment includes a rotor inside the flotation tank.

In one embodiment of the flotation plant, the mixing equipment includes a stator inside the flotation tank. In one embodiment of the flotation plant, the flotation tank has a bottom, and the stator is connected to the self-supporting framework through the bottom.

According to a fourth aspect of the invention, the invention provides use of the tank module according to the second aspect of the invention for separating material by flotation based on differences of buoyancy properties of substances. For example there is buoyancy difference when organic material is separated from aqueous material.

According to a fifth aspect of the invention, the invention provides use of the tank module according to the second aspect for separating solid material by froth flotation based on differences of hydrophilic properties of substances. Solid materials separated by froth flotation could be oil sands, carbon, coal, talk, industrial minerals and mineral particles. The minerals may include industrial minerals and ore. Froth flotation to solid material could be made based on natural hydrophilic/hydrophobic difference or based on hydrophilic/hydrophobic differences made by addition of a surfactant or collector chemical or other chemical.

According to a sixth aspect of the invention, the invention provides use of the tank module according to the second aspect for concentrating ore by froth flotation. An ore is a type of rock that contains sufficient minerals with important elements including metals that can be economically extracted from the rock. Metal ores are generally oxides, sulfides, silicates, or metals such as native copper or gold. Froth flotation of ore could be made based on natural hydrophilic/hydrophobic difference or based on hydrophilic/hydrophobic differences made by addition of a surfactant or collector chemical or other chemical.

According to a seventh aspect not forming part of the invention, it is provided the use of the tank module according to the second aspect for flotation of substances containing abrasive material. The abrasive mineral may be, for example, pyrite, silica, chromite. The drive module being hoistable and transferable as one unit to gain access to the tanks enables that the tanks can easily be maintained or replaced when they are outworn and are at the end of their life. This is important especially with the use in connection with abrasive material. Use of the flotation plant which is easy to maintenance is effective when flotation is made to abrasive material.

According to an eighth aspect of the invention, the invention provides use of the tank module according to the second aspect for froth flotation of ore containing pyrite, silica, chromite. Use of the tank module which is easy to maintenance and has preferably tanks made from PE or PP is effective when flotation is made to ore containing pyrite, silica, chromite. PE and PP are durable against the ore containing pyrite, silica, chromite.

According to a ninth aspect of the invention, the invention provides a method of replacing the flotation tank according to the first aspect of the invention in a tank module according to the second aspect of the invention, the method comprising steps of removing the flotation tank out from inside the self-supporting framework, and installing another flotation tank into the self-supporting framework.

In one embodiment of the method, the steps of removing and installing the flotation tank are implemented by lifting the flotation tank.

According to a tenth aspect not forming part of the invention, it is provided a method of maintenance of a flotation plant according to the third aspect, Liuii,in which method an uppermost module is subject of maintenance. The uppermost module is hoisted up and transferred aside from the top of the lower module and the uppermost module is replaced by another uppermost module which is placed on top of the lower module.

According to an eleventh aspect not forming part of the invention, it is provided a method of maintenance of a flotation plant according to the third aspect, in which method the lower module, which is underneath an uppermost module, is subject of maintenance. The uppermost module is hoisted up from the top of the lower module and transferred aside for gaining access to the lower module.

In one embodiment of the method, while the uppermost module is away from the top of the lower module, maintenance operations are performed for the lower module.

In one embodiment of the method, while the uppermost module is away from the top of the lower module, the lower module is replaced by another lower module.

The invention is defined by the appended independent claims. Any information falling outside the scope of the claims is for explanation only.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 is an axonometric view of a flotation tank according to a first embodiment of the invention,
Figure 2 is a cross-section II-II from Figure 1,
Figure 3 is a side view of the flotation tank of Figure 1,
Figure 4 is a front view seen in a direction IV-IV from Figure 3,
Figure 5 is an axonometric view of a flotation tank according to a second embodiment of the invention,
Figure 6 is cross-section VI-VI from Figure 5,
Figure 7 is an axonometric view of a flotation tank according to a third embodiment not forming part of the invention,
Figure 8 is a side view of the flotation tank of Figure 7,
Figure 9 is a cross-section IX - IX from Figure 8,
Figure 10 is a cross-section X-X from Figure 11 of a tank module according to a first embodiment of the invention,
Figure 11 is a cross-section XI-XI from Figure 10,
Figure 12 is side view of a tank module according to a second embodiment of the invention, and
Figure 13 shows an elevation view of a flotation plant according to one embodiment of the invention.

### DETAILED DESCRIPTION OF THE INVENTION

Although flotation is disclosed in the following by reference to froth flotation, it should be noted that the principles of according to the invention can be implemented regardless of the specific type of the flotation, i.e. the flotation technique can be any of the known *per se* flotation techniques, such as froth flotation, dissolved air flotation or induced gas flotation

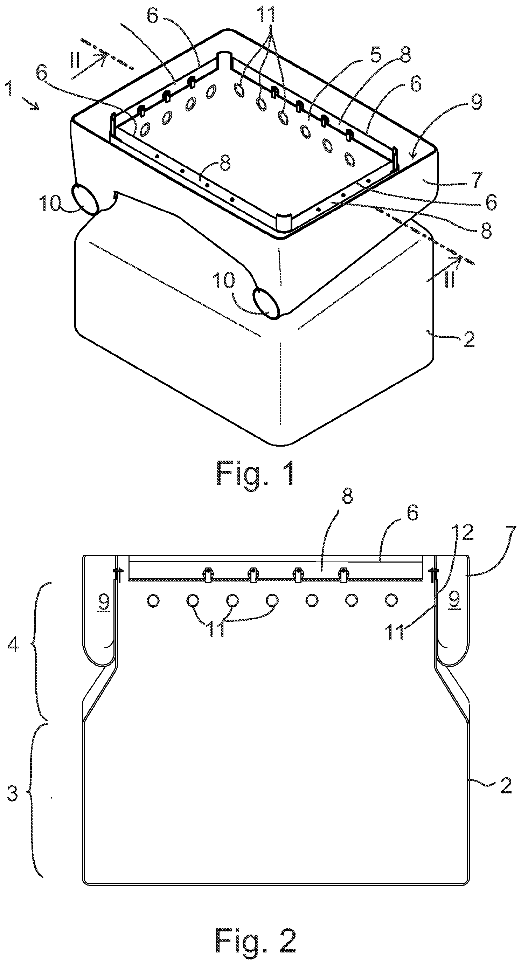

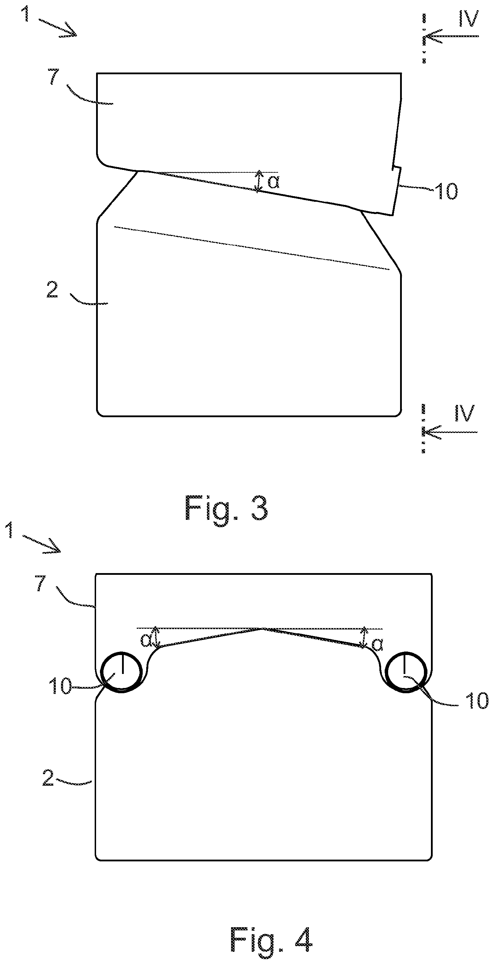

Figures 1 to 9 show three examples of flotation tanks 1. Referring to all shown embodiments the froth flotation tank 1 comprises a self-supporting tank 2. The tank 2 is a rigid structure which is able to hold its form while it is handled, hoisted and transferred. The tank 2 is made of thermoplastic polymer. The tank 2 has a lower tank part 3 and a tapered upper tank part 4. The tapered upper tank part 4 is narrower than the lower tank part 3. The tank 2 has a mouth 5 at the upper end of the upper tank part 4 and an overflow lip 6 at the periphery of the mouth 5. The froth flotation tank 1 also comprises an overflow receptacle 7. The overflow receptacle 7 is also made of thermoplastic polymer and connected by welding to the tapered upper part 4 of the tank 2 beside the overflow lip 6. The overflow receptacle receives, collects and discharges an overflow that overflows from the tank 2 over the overflow lip 6, when the froth flotation tank is in use. The overflow receptacle 7 circumferentially surrounds the mouth 5 of the tank 2. The overflow receptacle 7 and the tank 2 are welded together at their upper edges along the periphery of the mouth 5 in order to make a tight connection. As shown in Figures 1 and 2, additional weld holes 11 can also be made to the upper tank part 4 near to the upper end. The edges of the weld holes 11 can be welded to the inner wall 12 of the overflow receptacle 7 in order to secure the connection. Preferably the weld holes 11 have a diameter 50 - 100 mm.

The overflow lip 6 comprises a separate lip member 8. The lip member 8 is can be connected, e.g. by bolted joints, to the upper part of the tank 2 at the region of the mouth 5 of the tank 2 at a desired suitable height in order to obtain a suitable overflow height.

The overflow receptacle 7 comprises a chute 9 to collect the overflow, when in use, and at least one outlet 10 at the lowest part of the overflow receptacle 7, and the chute 9 is inclined towards the outlet 10. The angle α of inclination of the chute 9, in relation to horizontal, is 5° - 30°, more preferably 8° - 20°, most preferably 10° - 15°, in order to ensure continuous flow of the overflow by gravity.

The thermoplastic polymer material of the tank 2 and the overflow receptacle 7 is preferably polyethylene or polypropylene. The tank 2 and the overflow receptacle 7 may be rotational molded parts. Preferably the tank 2 has a wall thickness which is 5 - 30 mm. The volume of the tank 2 is 0.5 - 20 m³, more preferably 1 - 15 m³, most preferably 1 - 8 m³.

Figures 1 - 6 show two embodiments of froth flotation tanks both having the lower tank part 3 which has a rectangular cross-sectional shape.

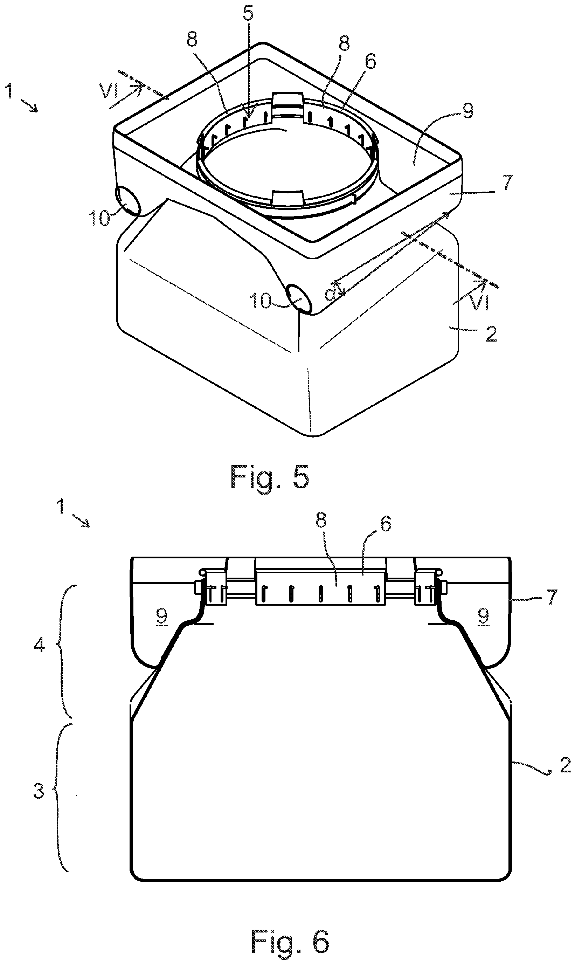

Preferably the lower tank part 3 of the froth flotation tank 1 has a rectangular cross-sectional shape when the volume of the tank 2 is greater than 8 m³. In the embodiment of Figure 1 the mouth 5 of the tank 2 is rectangular. In the embodiment of Figure 5 the mouth 5 of the tank 2 is circular. Due to its form the circular mouth 5 is stiff by nature.

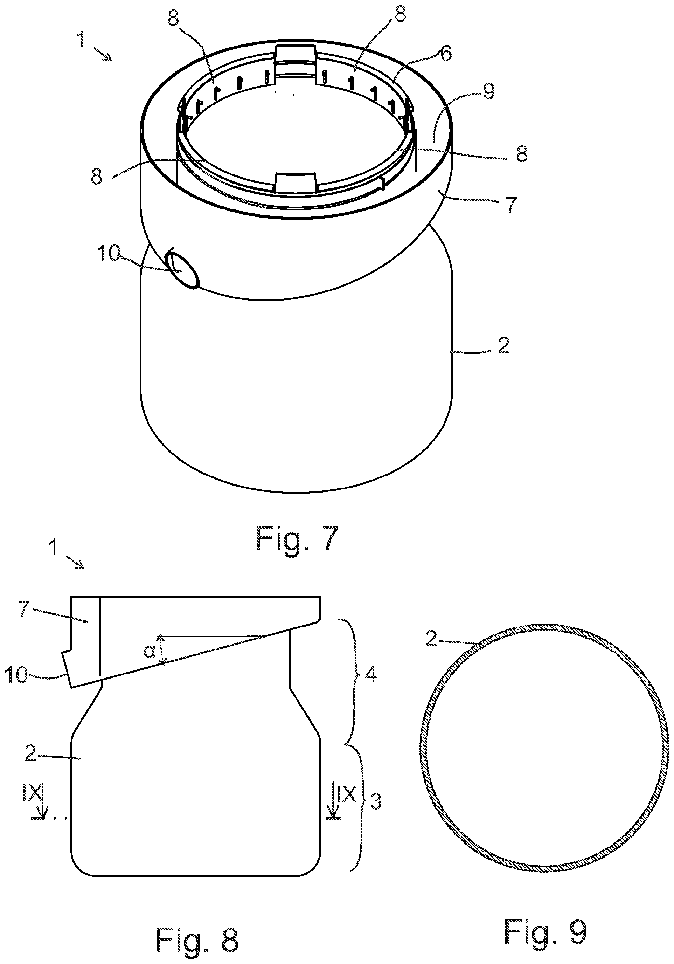

Figure 7 shows an embodiment wherein the cross-sectional shape of the lower tank part 3 is circular and the mouth 5 is also circular. As shown in Figure 9, preferably the tank 2 has a circular cross-section, i.e. the tank 2 is cylindrical when the volume of the tank 2 is at most 8 m³. The overflow receptacle 7 is also circular.

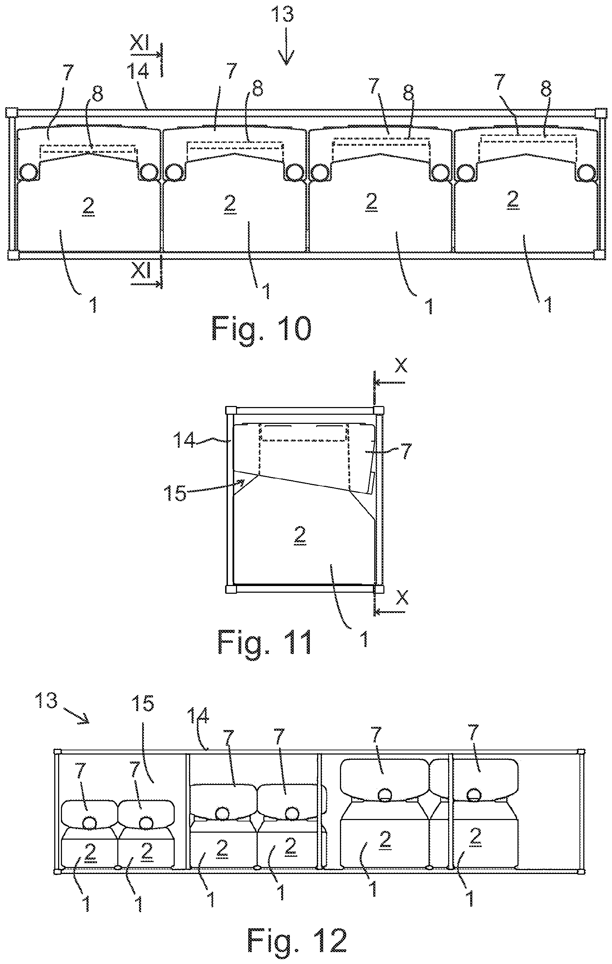

Figures 10 - 12 show examples of a tank module 13. The tank module 13 comprises a self-supporting framework 14 which has an inner space 15. In this example four flotation tanks 1 are disposed successively in a row in the inner space 15 of the self-supporting framework 15 of the module. The flotation tanks 1 may be those which are shown and disclosed in relation to Figures 1 to 6. The tanks 2 of the flotation tanks 1 are in fluid communication with each other. Each flotation tank 1 has a lip member 8 which is adjusted at a different height position in relation to the lip member 8 of another neighboring flotation tank 1.

Figure 12 shows a tank module 13 in which there are cylindrical flotation tanks 1 according to Figures 7 to 9 arranged in the inner space 15 of the self-supporting framework 14.

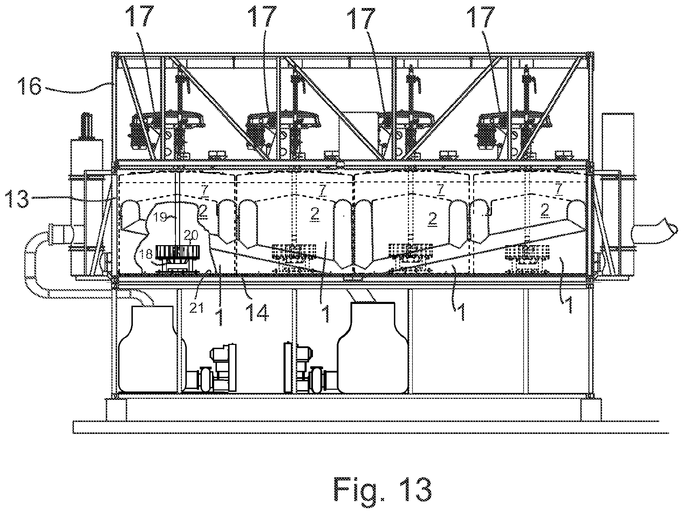

Figure 13 shows an illustration of a flotation plant. The flotation plant comprises a tank module 13 and a drive module 16. The tank module 13 includes four flotation tanks 1 as disclosed in relation to Figure 10.

The drive module 16 is removably stacked and aligned on top of the tank module 13. The drive module 16 includes four drive units 17 for the equipment immersed in the feedstock subject to flotation, the equipment performing the flotation action. The drive module 16 is a rigid and self-supporting unit capable of being transferable and hoistable as an integral entity.

The flotation plant comprises gas adding equipment for adding gas to the feedstock subject of flotation. The gas adding equipment for adding gas to the feedstock subject of flotation are in the flotation tank 1. The gas adding equipment includes a rotor 18 inside the flotation tank 1. The gas adding equipment includes a hollow drive shaft 19 rotatable by the drive unit 17, and the rotor 18 is connected to the drive shaft 19.

The flotation plant also comprises mixing equipment which includes the rotor 18 inside the flotation tank 1. The mixing equipment also includes a stator 20 inside the flotation tank 1. The flotation tank 1 has a bottom 21. The stator 20 is connected to the self-supporting framework 14 through the bottom 21.

Maintenance of the flotation plant is easy and can be performed quickly. If an uppermost module, the drive module 16, in the stack of modules is subject of maintenance, the uppermost module 16 is simply hoisted up and transferred aside and is replaced by another uppermost module 16. If the tank module 13, located underneath the uppermost drive module 16 is subject of maintenance, then the drive module 13 is hoisted up from the top of the tank module 13 and transferred aside for gaining access to the tank module. While the drive module 16 is away from the top of the tank module 13, maintenance operations can be performed for the tank module. Alternatively, the tank module 13 can simply be replaced by another tank module 13.

## Claims

1. A flotation tank (1) for being disposed in an inner space (15) of a self-supporting framework (14), the flotation tank comprising
- a self-supporting tank (2), the tank (2) having a lower tank part (3) and a tapered upper tank part (4) which is narrower than the lower tank part (3), the tank (2) having a mouth (5) at the upper end of the upper tank part (4) and an overflow lip (6) at the periphery of the mouth (5), and
- an overflow receptacle (7), the overflow receptacle (7) being connected to the tapered upper part (4) of the tank (2) beside the overflow lip (6) for receiving, collecting and discharging an overflow that overflows from the tank (2) over the overflow lip (6), when in use **characterized in that** the tank (2) and the overflow receptacle (7) are made of thermoplastic polymer; and that the overflow lip (6) comprises a separate lip member (8), and the lip member (8) is connectable to the upper part of the tank (2) at a desired height position to obtain a suitable overflow height for the overflow.

2. The flotation tank according to claim 1, **characterized in that** the overflow receptacle (7) and the tank (2) are connected to each other by welding.

3. The flotation tank according to claim 1 or 2, **characterized in that** the overflow receptacle (7) surrounds circumferentially the mouth (5) of the tank (2).

4. The flotation tank according to any one of the claims 1 to 3, **characterized in that** the overflow receptacle (7) comprises a chute (9) for collecting the overflow, when in use, and at least one outlet (10) at the lowest part of the overflow receptacle (7), and the chute (9) is inclined towards the outlet (10) .

5. A tank module (13), **characterized in that** the tank module comprises
- a self-supporting framework (14) having an inner space (15), and
- at least two flotation tanks (1) according to any one of the claims 1 to 4 is disposed in the inner space (15).

6. The tank module according to claim 5, **characterized in that** the tank module includes at least two successive flotation tanks (1) which are in fluid communication with each other, the flotation tanks (1) each having a lip member (8) which is adjusted at a different height position in relation to the lip member (8) of the other flotation tank (1).

7. Use of the tank module according to claim 5 or 6 for separating material by flotation based on differences of buoyancy properties of substances, or
for separating solid material by froth flotation based on differences of hydrophilic properties of substances, or
for concentrating ore by froth flotation, or
for flotation of substances containing abrasive material, or
for froth flotation of ore containing pyrite, silica, chromite.

8. A method of replacing the flotation tank (1) according to any one of the claims 1 to 4 in a tank module (13) according to any one of the claims 5 or 6, **characterized in that** the method comprises steps of
- removing the flotation tank (1) out from inside the self-supporting framework (14), and
- installing another flotation tank (1) into the self-supporting framework (14).

9. The method according to claim 8, **characterized in that** the steps of removing and installing the flotation tank (1) are implemented by lifting the flotation tank (1).

## Patentansprüche

1. Flotationstank (1) zur Anordnung in einem Innenraum (15) eines selbsttragenden Rahmens (14), umfassend:
- einen selbsttragenden Tank (2), wobei der Tank (2) einen unteren Tankteil (3) und einen sich verjüngenden oberen Tankteil (4) aufweist, der schmaler ist als der untere Tankteil (3), wobei der Tank (2) eine Öffnung (5) an dem oberen Ende des oberen Tankteils (4) und eine Überlauflippe (6) an dem Umfang der Öffnung (5) aufweist, und
- ein Überlaufbehälter (7), wobei der Überlaufbehälter (7) mit dem sich verjüngenden oberen Teil (4) des Tanks (2) neben der Überlauflippe (6) verbunden ist zum Empfangen, Sammeln und Entleeren eines Überlaufs, der im Betrieb aus dem Tank (2) über die Überlauflippe (6) überläuft, **dadurch gekennzeichnet, dass** der Tank (2) und der Überlaufbehälter (7) aus einem thermoplastischen Polymer hergestellt sind; und dass die Überlauflippe (6) ein separates Lippenelement (8) umfasst, und das Lippenelement (8) mit dem oberen Teil des Tanks (2) in einer gewünschten Höhenposition verbindbar ist, um eine geeignete Überlaufhöhe für den Überlauf zu erhalten.

2. Flotationstank nach Anspruch 1, **dadurch gekennzeichnet, dass** der Überlaufbehälter (7) und der Tank (2) durch Schweißen miteinander verbunden sind.

3. Flotationstank nach Anspruch 1 oder 2, **dadurch gekennzeichnet, dass** der Überlaufbehälter (7) umlaufend die Öffnung (5) des Tanks (2) umgibt.

4. Flotationstank nach einem der Ansprüche 1 bis 3, **dadurch gekennzeichnet, dass** der Überlaufbehälter (7) eine Rinne (9) zum Sammeln des Überlaufs im Betrieb und wenigstens einen Auslass (10) am untersten Teil des Überlaufbehälters (7) umfasst, und dass die Rinne (9) zum Auslass (10) hin geneigt ist.

5. Tankmodul (13), **dadurch gekennzeichnet, dass** das Tankmodul umfasst
- einen selbsttragenden Rahmen (14) mit einem Innenraum (15), und
- wenigstens zwei Flotationstanks (1) nach einem der Ansprüche 1 bis 4, die in dem Innenraum (15) angeordnet sind.

6. Tankmodul nach Anspruch 5, **dadurch gekennzeichnet, dass** das Tankmodul wenigstens zwei aufeinanderfolgende Flotationstanks (1) umfasst, die in einer Fluidverbindung miteinander stehen, wobei die Flotationstanks (1) jeweils ein Lippenelement (8) aufweisen, das in einer unterschiedlichen Höhenposition in Bezug auf das Lippenelement (8) des anderen Flotationstanks (1) eingestellt ist.

7. Verwendung des Tankmoduls nach Anspruch 5 oder 6 zur Trennung von Material durch Flotation basierend auf Unterschieden in den Auftriebseigenschaften von Substanzen,
oder zum Trennen von festem Material durch Schaumflotation basierend auf Unterschieden in den Auftriebseigenschaften von Substanzen, oder
zum Konzentrieren von Erz durch Schaumflotation, oder
zur Flotation von Substanzen, die abrasives Material enthalten, oder
zur Schaumflotation von Erz, das Pyrit, Kieselerde, Chromit enthält.

8. Verfahren zum Ersetzen des Flotationstanks (1) nach einem der Ansprüche 1 bis 4 in einem Tankmodul (13) nach einem der Ansprüche 5 oder 6, **dadurch gekennzeichnet, dass** das Verfahren die Schritte umfasst
- Entfernen des Flotationstanks (1) aus dem Inneren des selbsttragenden Rahmens (14) nach außen, und
- Installieren eines anderen Flotationstanks (1) in den selbsttragenden Rahmen (14).

9. Verfahren nach Anspruch 8, **dadurch gekennzeichnet, dass** die Schritte des Entfernens und des Installierens des Flotationstanks (1) durch Anheben des Flotationstanks (1) durchgeführt werden.

## Revendications

1. Réservoir de flottation (1) destiné à être disposé dans un espace interne (15) d'une ossature autoportante (14), le réservoir de flottation comprenant
- un réservoir autoportant (2), le réservoir (2) ayant une partie de réservoir inférieure (3) et une partie de réservoir supérieure conique (4) qui est plus étroite que la partie de réservoir inférieure (3), le réservoir (2) ayant une embouchure (5) à l'extrémité supérieure de la partie de réservoir supérieure (4) et une lèvre de trop-plein (6) à la périphérie de l'embouchure (5), et
- un réceptacle de trop-plein (7), le réceptacle de trop-plein (7) étant relié à la partie supérieure conique (4) du réservoir (2) à côté de la lèvre de trop-plein (6) pour recevoir, collecter et évacuer un trop-plein qui déborde du réservoir (2) sur la lèvre de trop-plein (6), en cours d'utilisation, **caractérisé en ce que** le réservoir (2) et le réceptacle de trop-plein (7) sont réalisés en polymère thermoplastique ; et **en ce que** la lèvre de trop-plein (6) comprend un élément de lèvre séparé (8), et l'élément de lèvre (8) peut être relié à la partie supérieure du réservoir (2) à une position de hauteur souhaitée pour obtenir une hauteur de trop-plein appropriée pour le trop-plein.

2. Réservoir de flottation selon la revendication 1, **caractérisé en ce que** le réceptacle de trop-plein (7) et le réservoir (2) sont reliés l'un à l'autre par soudage.

3. Réservoir de flottation selon la revendication 1 ou 2, **caractérisé en ce que** le réceptacle de trop-plein (7) entoure de manière circonférentielle l'embouchure (5) du réservoir (2).

4. Réservoir de flottation selon l'une quelconque des revendications 1 à 3, **caractérisé en ce que** le réceptacle de trop-plein (7) comprend une goulotte (9) pour collecter le trop-plein, en cours d'utilisation, et au moins une sortie (10) à la partie la plus basse du réceptacle de trop-plein (7), et la goulotte (9) est inclinée vers la sortie (10).

5. Module de réservoir (13), **caractérisé en ce que** le module de réservoir comprend
- une ossature autoportante (14) ayant un espace interne (15), et
- au moins deux réservoirs de flottation (1) selon l'une quelconque des revendications 1 à 4 sont disposés dans l'espace interne (15).

6. Module de réservoir selon la revendication 5, **caractérisé en ce que** le module de réservoir comporte au moins deux réservoirs de flottation successifs (1) qui sont en communication fluidique l'un avec l'autre, les réservoirs de flottation (1) ayant chacun un élément de lèvre (8) qui est ajusté à une position de hauteur différente par rapport à l'élément de lèvre (8) de l'autre réservoir de flottation (1).

7. Utilisation du module de réservoir selon la revendication 5 ou 6 pour séparer un matériau par flottation sur la base des différences de propriétés de flottabilité des substances, ou
pour séparer un matériau solide par flottation par mousse sur la base des différences de propriétés hydrophiles des substances, ou
pour concentrer le minerai par flottation par mousse, ou
pour la flottation des substances contenant un matériau abrasif, ou
pour la flottation par mousse de minerai contenant de la pyrite, de la silice et de la chromite.

8. Procédé de remplacement du réservoir de flottation (1) selon l'une quelconque des revendications 1 à 4 dans un module de réservoir (13) selon l'une quelconque des revendications 5 et 6, **caractérisé en ce que** le procédé comprend les étapes consistant
- à retirer le réservoir de flottation (1) de l'intérieur de l'ossature autoportante (14), et
- à installer un autre réservoir de flottation (1) dans l'ossature autoportante (14).

9. Procédé selon la revendication 8, **caractérisé en ce que** les étapes de retrait et d'installation du réservoir de flottation (1) sont mises en œuvre en soulevant le réservoir de flottation (1).
